# EUROPEAN PATENT SPECIFICATION

(11) **EP 4 477 943 B1**
(45) Date of publication and mention of the grant of the patent: **04.11.2026**
(21) Application number: 23209665.1
(22) Date of filing: 14.11.2023
(51) Int. Cl.: F21S 41/143, F21S 41/153, F21S 41/19, F21S 41/265, F21S 41/27, F21S 41/20, F21S 41/32, F21S 41/663, F21S 45/48, B60Q 1/00, F21W 102/13

(54) **LIGHT DEVICE FOR A VEHICLE**
LEUCHTVORRICHTUNG FÜR EIN FAHRZEUG
DISPOSITIF D'ÉCLAIRAGE POUR UN VÉHICULE

(30) Priority: 15.06.2023 TW 112122444
(43) Date of publication of application: 18.12.2024
(73) Proprietor: Coplus Inc., Tainan City 709031 (TW)
(72) Inventor: WU, Po-Hua, Tainan City 709031 (TW)
(74) Representative: Stöckeler, Ferdinand

(56) References cited:
- WO-A1-2021/166533
- WO-A1-2022/203073
- DE-A1- 102017 220 488
- DE-A1- 102018 206 709
- DE-U1- 202017 104 684
- JP-A- 2021 189 306
- US-A1- 2017 009 949
- US-A1- 2017 144 589

## Description

The invention relates to a light device for a vehicle, and more particularly to a light device which generates different beam illumination patterns.

A conventional light device for a vehicle includes a bulb-shaped low beam light emitting unit and a bulb-shaped high beam light emitting unit which are disposed within an enclosure and spaced apart from each other. When activated to a low illumination mode or a high illumination mode, the corresponding light emitting unit projects light through a light cover, a circular light spot is presented on the light cover and projects forward to generate a low beam illumination pattern or a high beam illumination pattern. Such circular light spot is monotonous. It is desirable to present a certain pattern such as letters or geometric shapes onto the light cover and project forwards a low beam illumination pattern or a high beam illumination pattern.

In DE10 2018 206709, there is disclosed a lighting system which includes a first lighting unit for generating an asymmetrical portion of a low beam, and a second lighting unit for generating high beam. Each of the lighting units has a plurality of radiation sources and light guides which extend in the transverse direction. The light guides of the first lighting unit and the light guides of the second lighting unit are integrally connected on their sides. A Fresnel lens is provided on the coupling-out surfaces of the light guides of the first and second lighting units for the radiation emitted by the radiation sources of the first and second illumination units. The Fresnel lens has a plurality of facets which extend in the transverse direction in the installed state.

Therefore, an object of the invention is to provide a light device for a vehicle that can alleviate at least one of the drawbacks of the prior art.

According to an aspect of the invention, there is provided a light device according to claim 1.

With the first lens bodies arranged to form a predetermined shape and projecting the light through the first lens portions, the first light emitting unit emits the light to present the predetermined shape, and the light projecting therethrough to produce the required first beam illumination pattern.

Other features and advantages of the invention will become apparent in the following detailed description of the embodiment with reference to the accompanying drawings. It is noted that various features may not be drawn to scale.
FIG. 1 is a perspective view illustrating an embodiment of a light device according to the invention.
FIG. 2 is an exploded perspective view of the embodiment.
FIG. 3 is a right sectional view of the embodiment.
FIG. 4 is a right sectional view of the embodiment, a light cover and a housing being removed for the sake of clarity.
FIG. 5 is an exploded perspective view illustrating a first light emitting unit, a second light emitting unit, a mounting frame and a heat sink unit of the embodiment.
FIG. 6 is a perspective view illustrating a first lens module and a second lens module of the embodiment.
FIG. 7 is a partly sectioned top view illustrating the first light emitting unit.
FIG. 8 is a partly sectioned top view illustrating the second light emitting unit.

It should be noted herein that for clarity of description, spatially relative terms such as "top," "bottom," "upper," "lower," "on," "above," "over," "downwardly," "upwardly" and the like may be used throughout the disclosure while making reference to the features as illustrated in the drawings. The features may be oriented differently (e.g., rotated 90 degrees or at other orientations) and the spatially relative terms used herein may be interpreted accordingly.

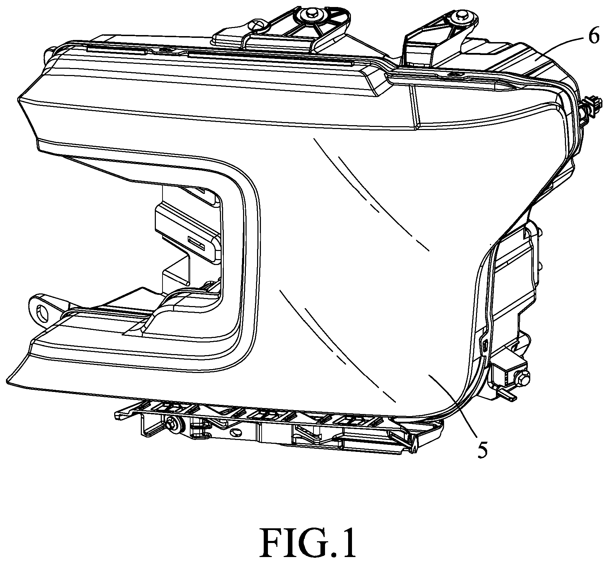

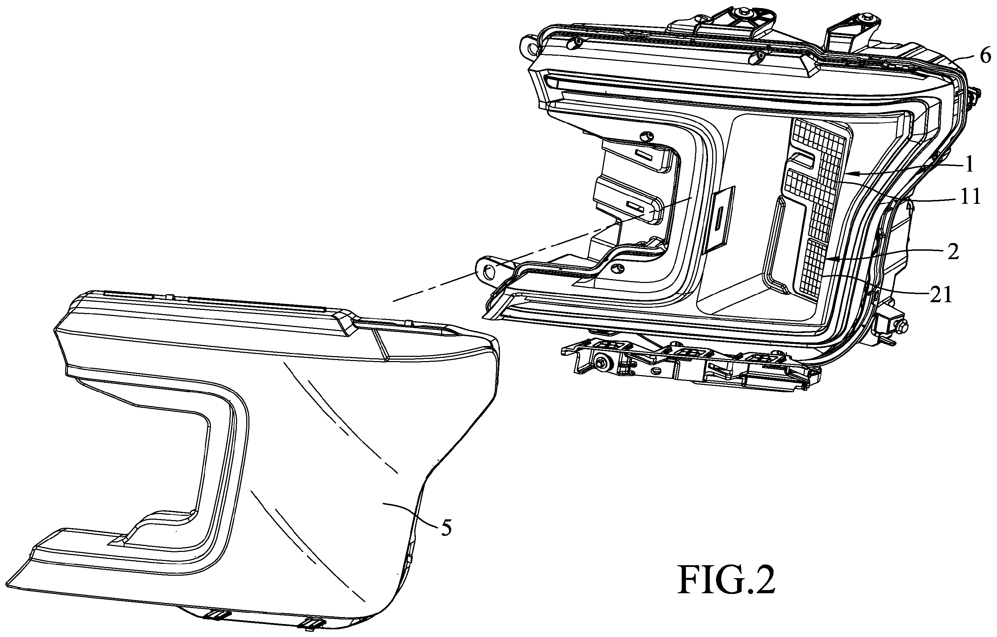

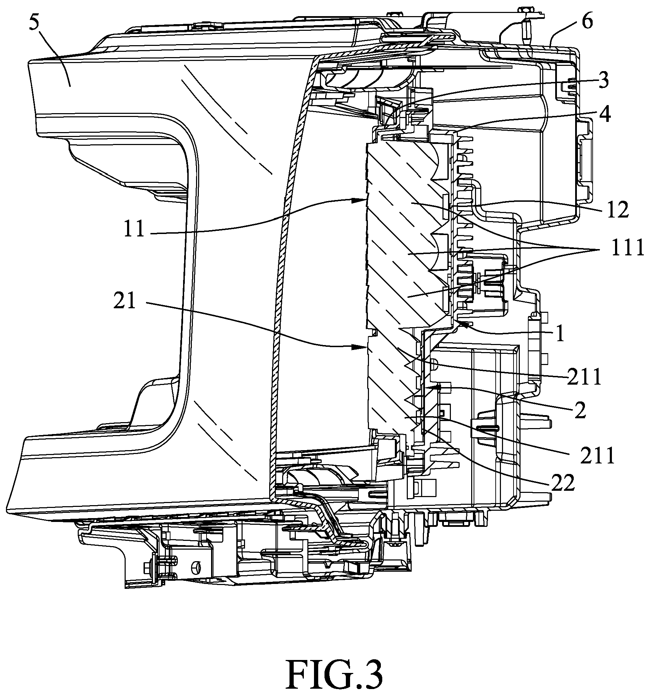

Referring to FIGS. 1, 2 and 3, an embodiment of a light device for a vehicle according to the invention is adapted to be a headlight controlled to generate at least two illumination patterns, such as but not limited to a low beam illumination pattern and a high beam illumination pattern. The light device includes a first light emitting unit 1, a second light emitting unit 2 which is disposed below the first light emitting unit 1, a mounting frame 3 and a heat sink unit 4 on which the first light emitting unit 1 and the second light emitting unit 2 are mounted and positioned in a gripping manner in an up-down direction, and an enclosure which includes a light cover 5 and a housing 6 that are coupled with each other in a front-rear direction to define a housing space therein for accommodating the first light emitting unit 1, the second light emitting unit 2 and the heat sink unit 4. That is, the first and second light emitting units 1, 2 are mounted and positioned in the housing space through the mounting frame 3 and the heat sink unit 4. Since the structure of the light cover 5 and the housing 6 is of a known type, a detailed description thereof is dispensed with.

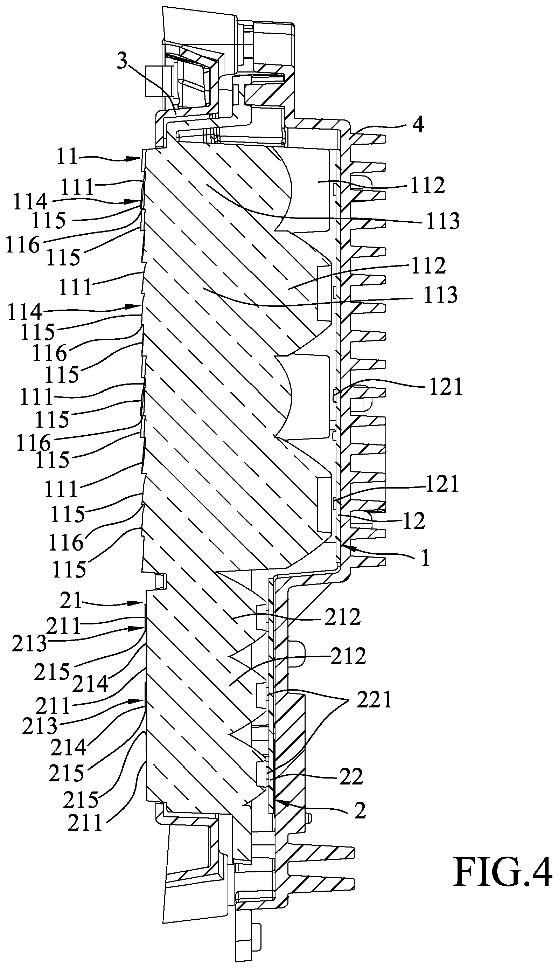

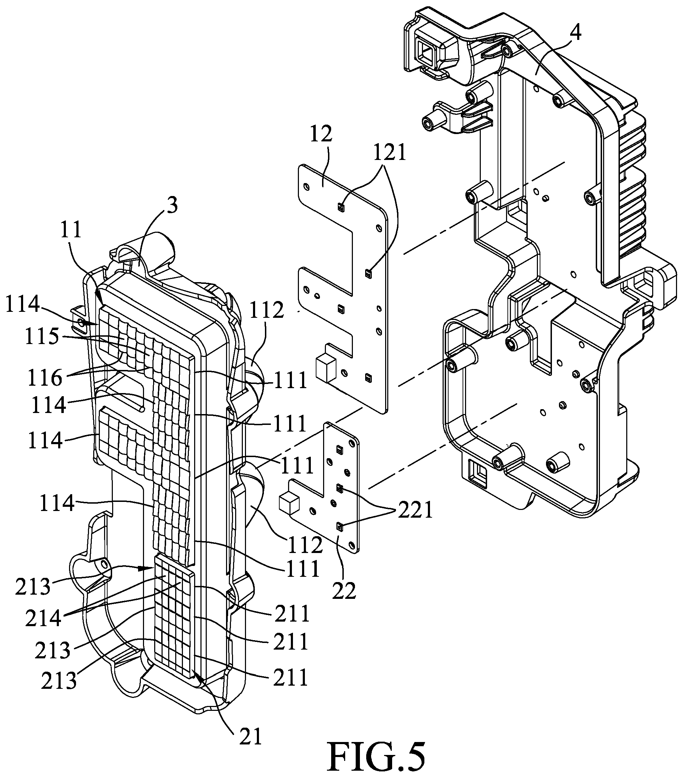

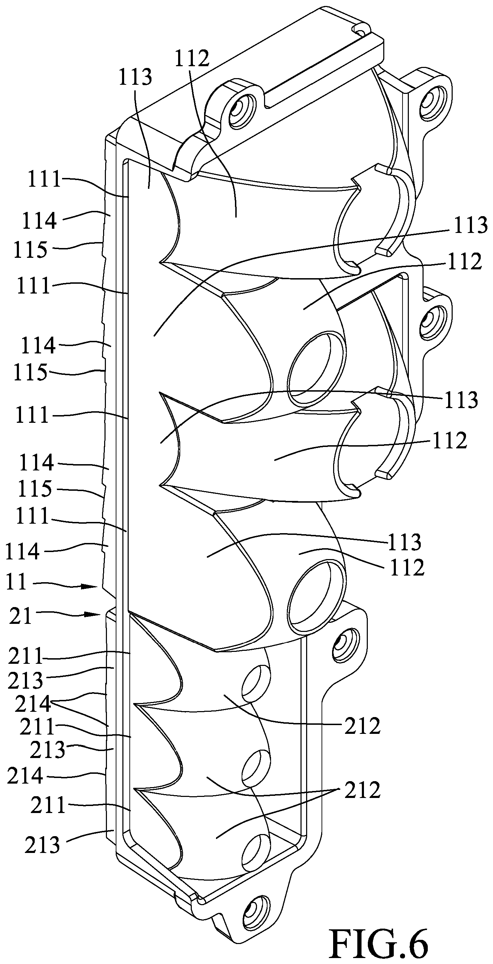

With reference to FIGS. 4, 5 and 6, a first light emitting unit 1 is operable to produce a first beam illumination pattern. The first light emitting unit 1 includes a first lens module 11 which is mounted on the mounting frame 3, and a first light emitting module 12 which is connected with the heat sink unit 4 and disposed rearwardly of the first lens module 11. In this embodiment, the first lens module 11 has four first lens bodies 111 which are arranged and integrally formed with one another to form a predetermined shape, such as a letter "F". The first light emitting module 12 has four first light sources 121 which are respectively disposed rearwardly of the first lens bodies 111.

Each first lens body 111 has a first light condensing section 112 for condensing light forwardly from the corresponding first light source 121, a light transferring section 113 which is disposed forwardly of the first light condensing section 112 for guiding the condensed light forwardly, and a first lens section 114 which protrudes forwardly of the mounting frame 3 and permits the light from the light transferring section 113 to project forwardly therethrough. The light transferring section 113 of each first lens body 111 is integrally formed with the light transferring section 113 of the adjacent first lens body 111.

The first lens section 114 of each first lens body 111 has a plurality of first lens portions 115 which are arranged along a plurality of rows that extend in a transverse direction (such as a left-right direction) and that array in an up-down direction. The first lens portions 115 are convex forward with different amplitudes, and a curvature of each first lens portion 115 measured in the left-right direction is different from that measured in the up-down direction. The first lens portions 115 of an upper row have lower ends which protrude more forward than upper ends of the first lens portions 115 of a lower row such that a step face 116 is formed between the lower ends of the first lens portions 115 of the upper row and the upper ends of the first lens portions 115 of the lower row. The light projecting forwardly through the first lens portions 115 of the first lens bodies 111 produces the first beam illumination pattern. In this embodiment, the first beam illumination pattern is a low beam illumination pattern.

In this embodiment, the light transferring section 113 of each first lens body 111 is integrally formed with the light transferring section 113 of the adjacent first lens body 111. Thus, the light entering the light transferring section 113 projects forwardly and scatters laterally to the light transferring section 113 of the adjacent first lens body 111 and to project forwardly from the adjacent first lens section 114. Alternatively, in other embodiments, the light transferring sections 113 of the adjacent first lens bodies 111 may be non-communicated with each other such that the light projects forwardly from the first lens portions 115 of the first lens bodies 111 to form the predetermined first beam illumination pattern, what is however not according to the invention. Moreover, in other embodiments, the light transferring section 113 may be omitted and each first lens body 111 only has the first light condensing section 112 and the first lens section 114, what is however also not according to the invention.

With reference to FIGS. 4, 5 and 6, the second light emitting unit 2 is disposed adjacent to and downwardly of the first light emitting unit 1 and cooperates with the first light emitting unit 1 to operably produce a second beam illumination pattern. The second light emitting unit 2 includes a second lens module 21 which is mounted on the mounting frame 3 and cooperates with the first lens module 11 to form another predetermined shape, and a second light emitting module 22 which is connected with the heat sink unit 4 and disposed rearwardly of the second lens module 21. In this embodiment, the second beam illumination pattern is a high beam illumination pattern.

The second lens module 21 has three second lens bodies 211 which are arranged and integrally formed with one another to cooperate with the first lens bodies 111 to form the predetermined shape, such as a larger letter "F". The second light emitting module 22 has three second light sources 221 which are respectively disposed rearwardly of the second lens bodies 211. Each second lens body 211 has a second light condensing section 212 for condensing light forwardly from the corresponding second light source 221, and a second lens section 213 which protrudes forwardly of the mounting frame 3 and which permits the condensed light to project forwardly therethrough. The second light condensing section 212 of each second lens body 211 is integrally formed with the second light condensing section 212 of an adjacent second lens body 211. The light transferring section 113 of each first lens body 111 is integrally formed with the second light condensing section 212 of an adjacent second lens body 211.

The second lens section 213 of each second lens body 211 has a plurality of second lens portions 214 which are arranged along a plurality of rows that extend in the transverse direction (such as the left-right direction) and that array in the up-down direction. The second lens portions 214 are convex forward with different amplitudes, and a curvature of each second lens portion 214 measured in the left-right direction is different from that measured in the up-down direction. The second lens portions 214 of an upper row have lower ends which protrude more forward than upper ends of the second lens portions 214 of a lower row such that a step face 215 is formed between the lower ends of the second lens portions 214 of the upper row and the upper ends of the second lens portions 214 of the lower row.

Cooperating with the light projecting forwardly through the first lens portions 115 of the first lens bodies 111, the light projecting forwardly through the second lens portions 214 of the second lens bodies 211 produces the second beam illumination pattern.

In this embodiment, the second light condensing sections 212 of the adjacent second lens bodies 211 are integrally formed with each other. Thus, the light condensed forwardly from the second light condensing section 212 projects forwardly and scatters laterally to the adjacent second light condensing section 212 and to project forwardly from the adjacent second lens section 213.

The light transferring section 113 of the first lens body 111 is integrally formed with the second light condensing section 212 of the adjacent second lens body 211. Thus, the light from the light transferring section 113 of the first lens body 111 projects forwardly through the corresponding first lens section 114 in the front side, and scatters laterally to the second light condensing section 212 of the adjacent second lens body 211 and projects forwardly through the adjacent second lens section 213.

Alternatively, in other embodiments, the second light condensing sections 212 of the adjacent second lens bodies 211 may be non-communicated with each other, and the light transferring section 113 of the first lens body 111 and the second light condensing section 212 of the adjacent second lens body 211 may be non-communicated with each other such that the light projecting forwardly from the second lens portions 214 of the second lens bodies 211 cooperates with the light projecting forwardly from the first lens portions 115 of the first lens bodies 111 to form the predetermined second beam illumination pattern.

In this embodiment, according to the invention, the first beam illumination pattern is a low beam illumination pattern, and the second beam illumination pattern is a high beam illumination pattern. The number of the first lens bodies 111 of the first light emitting unit 1 is four, and the first lens bodies 111 are arranged to form a letter "F". The number of the second lens bodies 211 of the second light emitting unit 2 is three, and the second lens bodies 211 and the first lens bodies 111 are arranged to form a large letter "F". In other embodiments, the first and second beam illumination patterns may be exchanged, and the numbers of the first and second lens bodies 111, 211 may be varied, which depends on the predetermined shape the first and second lens bodies 111, 211 to arrange to form therefrom.

Moreover, the predetermined shape that the first lens bodies 111 and the second lens bodies 211 form is not limited to be a letter "F", and may be any one of lowercase or capital letters, Korean alphabet, Japanese syllabary, numbers or geometric shapes. For example, it may be a letter "O", number "7" or a star-shape.

Furthermore, in other embodiments, other than a shape of letter "F", the first lens bodies 111 may be arranged to form a predetermined shape, such as a letter "O", and the second lens bodies 211 and the first lens bodies 211 are cooperatively arranged to form a letter "Q".

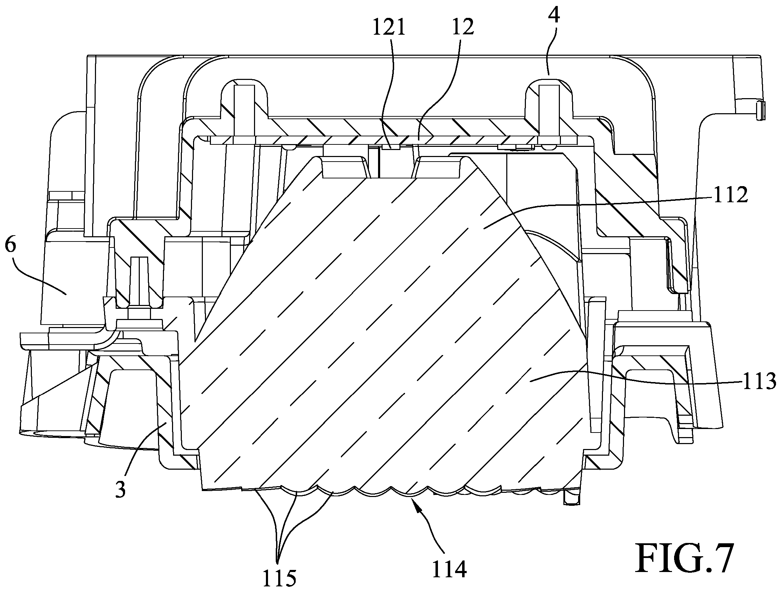

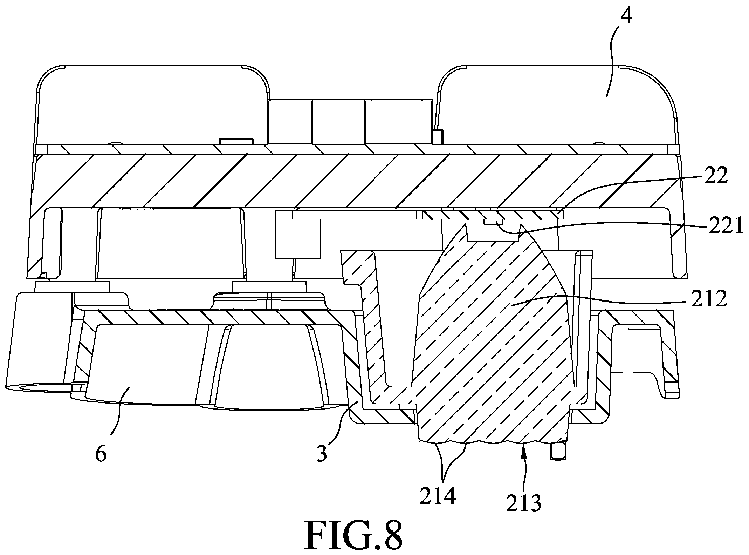

With reference to FIGS. 4, 5, 7 and 8, in this embodiment, the first lens portions 115 of one part have the same curvature, and the first lens portions 115 of the other part have different curvatures. The second lens portions 214 of one part have the same curvature, and the second lens portions 214 of the other part have different curvatures. In other embodiments, each of the first lens portions 115 may have the same curvature, or have a curvature different from that of any other one of the first lens portions 115. Each of the second lens portions 214 may have the same curvature, or have a curvature different from that of any other one of the second lens portions 214. Similarly, the first lens portions 115 are arranged such that the light projecting forwardly through the first lens portions 115 produces a predetermined first beam illumination pattern, and the second lens portions 214 are arranged such that, cooperating with the light projecting forwardly through the first lens portions 115, the light projecting forwardly through the second lens portions 214 produces a predetermined second beam illumination pattern.

As illustrated, with the first lens bodies 111 arranged to form a predetermined shape and projecting the light through the first lens portions 115, the first light emitting unit 1 emits the light to present the predetermined shape, and the light projecting forwardly therethrough produces the required first beam illumination pattern. Also, with the second lens bodies 211 cooperatively arranged with the first lens bodies 111 to form another predetermined shape and projecting the light through the second lens portions 214, the second light emitting unit 2 and the first light emitting unit 1 emit the light to present the predetermined another shape, and the light projecting forwardly therethrough cooperates with the light projecting forwardly through the first lens portions 115 and produces the required second beam illumination pattern.

## Claims

1. A light device for a vehicle comprising:
a first light emitting unit (1) which is operable to produce a low beam illumination pattern, said first light emitting unit (1) including a first lens module (11) and a first light emitting module (12) which is disposed rearwardly of said first lens module (11),
said first lens module (11) having a plurality of first lens bodies (111) which are arranged to form a predetermined shape, said first light emitting module (12) having a plurality of first light sources (121) which are respectively disposed rearwardly of said first lens bodies (111), each of said first lens bodies (111) having a first light condensing section (112) for condensing light forwardly from a corresponding one of said first light sources (121), and a first lens section (114) which permits the condensed light to project forwardly therethrough, said first lens section (114) having a plurality of first lens portions (115) which are arranged along at least one row that extends in a transverse direction such that the light projects forwardly through said first lens portions (115) of said first lens bodies (111) to produce said low beam illumination pattern, wherein:
said first lens section (114) of each of said first lens bodies (111) has a plurality of rows of said first lens portions (115) which are arranged in an up-down direction, said first lens portions (115) being convex forward with different amplitudes, and a curvature of each of said first lens portions (115) measured in the transverse direction being different from that measured in the up-down direction, said first lens portions (115) of an upper row having lower ends which project more forward than upper ends of said first lens portions (115) of a lower row such that a step face is formed between said lower ends of said upper row of said first lens portions (115) and said upper ends of said lower row of said first lens portions (115),
each of said first lens bodies (111) further having a light transferring section (113) which is formed between said first light condensing section (112) and said first lens section (114) for guiding the condensed light forwardly to said first lens section (114), said light transferring section (113) of each of said first lens bodies (111) being integrally formed with said light transferring section (113) of an adjacent one of said first lens bodies (111),
the light device further comprising:
a second light emitting unit (2) disposed adjacent to said first light emitting unit (1) and cooperating with said first light emitting unit (1) to operably produce a high beam illumination pattern, said second light emitting unit (2) including a second lens module (21) which cooperates with said first lens module (11) to form another predetermined shape, and a second light emitting module (22) which is disposed rearwardly of said second lens module (21), said second lens module (21) having a plurality of second lens bodies (211) which are arranged to cooperate with said first lens bodies (111) to form said another predetermined shape, said second light emitting module (22) having a plurality of second light sources (221) which are respectively disposed rearwardly of said second lens bodies (211), each of said second lens bodies (211) having a second light condensing section (212) for condensing light forwardly from a corresponding one of said second light sources (221), and a second lens section (213) which permits the condensed light to project forwardly therethrough, said second lens section (213) having a plurality of second lens portions (214) which are arranged along a plurality of rows that extend in the transverse direction and are arranged in an up-down direction such that, cooperating with the light projecting forwardly through said first lens portions (115) of said first lens bodies (111), the light projects forwardly through said second lens portions (214) of said second lens bodies (211) to produce said high beam illumination pattern,
said second lens portions (214) being convex forward with different amplitudes, and a curvature of each of said second lens portions (214) measured in the transverse direction is different from that measured in the up-down direction, said second lens portions (214) of an upper row having lower ends which protrude more forward than upper ends of said second lens portions (214) of a lower row such that a step face (215) is formed between said lower ends of said second lens portions (214) of said upper row and said upper ends of said second lens portions (214) of said lower row.

2. The light device of claim 1, wherein each of said first lens portions (115) has the same curvature.

3. The light device of claim 2, wherein each of said second lens portions (214) has the same curvature.

4. The light device of claim 2, wherein each of said second lens portions (214) has a curvature different from that of any other one of said second lens portions (214).

5. The light device of claim 2, wherein said second lens portions (214) of one part have the same curvature, and said second lens portions (214) of the other part have different curvatures.

6. The light device of claim 1, wherein each of said first lens portions (115) has a curvature different from that of any other one of said first lens portions (115).

7. The light device of claim 6, wherein each of said second lens portions (214) has the same curvature.

8. The light device of claim 6, wherein each of said second lens portions (214) has a curvature different from that of any other one of said second lens portions (214).

9. The light device of claim 6, wherein said second lens portions (214) of one part have the same curvature, and said second lens portions (214) of the other part have different curvatures.

10. The light device of claim 1, wherein said first lens portions (115) of one part have the same curvature, and said first lens portions (115) of the other part have different curvatures.

11. The light device of claim 10, wherein each of said second lens portions (214) has the same curvature.

12. The light device of claim 10, wherein each of said second lens portions (214) has a curvature different from that of any other one of said second lens portions (214).

13. The light device of claim 10, wherein said second lens portions (214) of one part have the same curvature, and said second lens portions (214) of the other part have different curvatures.

14. The light device of claim 1, wherein said second light condensing section (212) of each of said second lens bodies (211) is integrally formed with said second light condensing section (212) of an adjacent one of said second lens bodies (211).

15. The light device of claim 1, wherein said light transferring section (113) of each of said first lens bodies (111) is integrally formed with said second light condensing section (212) of an adjacent one of said second lens bodies (211).

16. The light device of claim 1, further comprising a heat sink unit (4) which is connected with said first light emitting module (12) and said second light emitting module (22), and a light cover (5) and a housing (6) which cooperatively define a housing space therein for accommodating said first light emitting unit (1), said second light emitting unit (2) and said heat sink unit (4).

## Patentansprüche

1. Eine Lichtvorrichtung für ein Fahrzeug, die folgendes Merkmal aufweist:
eine erste Licht emittierende Einheit (1), die dahingehend wirksam ist, ein Abblendlichtbeleuchtungsmuster zu erzeugen, wobei die erste Licht emittierende Einheit (1) ein erstes Linsenmodul (11) und ein erstes Licht emittierendes Modul (12) umfasst, das sich hinter dem ersten Linsenmodul (11) befindet,
wobei das erste Linsenmodul (11) eine Mehrzahl von ersten Linsenkörpern (111) aufweist, die dahingehend angeordnet sind, eine vorbestimmte Form zu bilden, wobei das erste Licht emittierende Modul (12) eine Mehrzahl von ersten Lichtquellen (121) aufweist, die sich jeweils hinter den ersten Linsenkörpern (111) befinden, wobei jeder der ersten Linsenkörper (111) ein erstes Lichtkondensierungssegment (112) zum Kondensieren von Licht aus einer entsprechenden einen der ersten Lichtquellen (121) nach vorne und ein erstes Linsensegment (114) aufweist, das es ermöglicht, dass das kondensierte Licht durch dasselbe nach vorne projiziert wird, wobei das erste Linsensegment (114) eine Mehrzahl von ersten Linsenabschnitten (115) aufweist, die entlang zumindest einer Reihe angeordnet sind, die sich in einer Querrichtung erstreckt, sodass das Licht durch die ersten Linsenabschnitte (115) der ersten Linsenkörper (111) nach vorne projiziert wird, um das Abblendlichtbeleuchtungsmuster zu erzeugen, wobei:
das erste Linsensegment (114) jedes der ersten Linsenkörper (111) eine Mehrzahl von Reihen der ersten Linsenabschnitte (115) aufweist, die in einer Auf-ab-Richtung angeordnet sind, wobei die ersten Linsenabschnitte (115) mit unterschiedlichen Amplituden nach vorne konvex sind und sich eine in der Querrichtung gemessene Krümmung jedes der ersten Linsenabschnitte (115) von der in der Auf-ab-Richtung gemessenen Krümmung unterscheidet, wobei die ersten Linsenabschnitte (115) einer oberen Reihe untere Enden aufweisen, die weiter nach vorne als obere Enden der ersten Linsenabschnitte (115) einer unteren Reihe vorstehen, sodass eine Stufenfläche zwischen den unteren Enden der oberen Reihe der ersten Linsenabschnitte (115) und den oberen Enden der unteren Reihe der ersten Linsenabschnitte (115) gebildet wird,
wobei jeder der ersten Linsenkörper (111) ferner ein Lichtübertragungssegment (113) aufweist, das zwischen dem ersten Lichtkondensierungssegment (112) und dem ersten Linsensegment (114) gebildet ist, um das kondensierte Licht nach vorne zu dem ersten Linsensegment (114) zu leiten, wobei das Lichtübertragungssegment (113) jedes der ersten Linsenkörper (111) einstückig mit dem Lichtübertragungssegment (113) eines angrenzenden einen der ersten Linsenkörper (111) gebildet ist,
wobei die Lichtvorrichtung ferner folgendes Merkmal aufweist:
eine zweite Licht emittierende Einheit (2), die sich angrenzend an die erste Licht emittierende Einheit (1) befindet und mit der ersten Licht emittierenden Einheit (1) zusammenwirkt, um wirksam ein Fernlichtbeleuchtungsmuster zu erzeugen, wobei die zweite Licht emittierende Einheit (2) ein zweites Linsenmodul (21), das mit dem ersten Linsenmodul (11) zusammenwirkt, um eine andere vorbestimmte Form zu bilden, und ein zweites Licht emittierendes Modul (22) umfasst, das sich hinter dem zweiten Linsenmodul (21) befindet, wobei das zweite Linsenmodul (21) eine Mehrzahl von zweiten Linsenkörpern (211) aufweist, die dahingehend angeordnet sind, mit den ersten Linsenkörpern (111) zusammenzuwirken, um die andere vorbestimmte Form zu bilden, wobei das zweite Licht emittierende Modul (22) eine Mehrzahl von zweiten Lichtquellen (221) aufweist, die sich jeweils hinter den zweiten Linsenkörpern (211) befinden, wobei jeder der zweiten Linsenkörper (211) ein zweites Lichtkondensierungssegment (212) zum Kondensieren von Licht aus einer entsprechenden einen der zweiten Lichtquellen (221) nach vorne und ein zweites Linsensegment (213) aufweist, das es ermöglicht, dass das kondensierte Licht durch dasselbe nach vorne projiziert wird, wobei das zweite Linsensegment (213) eine Mehrzahl von zweiten Linsenabschnitten (214) aufweist, die entlang einer Mehrzahl von Reihen angeordnet sind, die sich in der Querrichtung erstrecken und in einer Auf-ab-Richtung angeordnet sind, sodass, in Zusammenwirkung mit dem Licht, das durch die ersten Linsenabschnitte (115) der ersten Linsenkörper (111) nach vorne projiziert wird, das Licht durch die zweiten Linsenabschnitte (214) der zweiten Linsenkörper (211) nach vorne projiziert wird, um das Fernlichtbeleuchtungsmuster zu erzeugen,
wobei die zweiten Linsenabschnitte (214) mit unterschiedlichen Amplituden nach vorne konvex sind und sich eine in der Querrichtung gemessene Krümmung jedes der zweiten Linsenabschnitte (214) von der in der Auf-ab-Richtung gemessenen Krümmung unterscheidet, wobei die zweiten Linsenabschnitte (214) einer oberen Reihe untere Enden aufweisen, die weiter nach vorne als obere Enden der zweiten Linsenabschnitte (214) einer unteren Reihe vorstehen, sodass eine Stufenfläche (215) zwischen den unteren Enden der zweiten Linsenabschnitte (214) der oberen Reihe und den oberen Enden der zweiten Linsenabschnitte (214) der unteren Reihe gebildet wird.

2. Die Lichtvorrichtung gemäß Anspruch 1, wobei jeder der ersten Linsenabschnitte (115) die gleiche Krümmung aufweist.

3. Die Lichtvorrichtung gemäß Anspruch 2, wobei jeder der zweiten Linsenabschnitte (214) die gleiche Krümmung aufweist.

4. Die Lichtvorrichtung gemäß Anspruch 2, wobei jeder der zweiten Linsenabschnitte (214) eine Krümmung aufweist, die sich von der eines anderen der zweiten Linsenabschnitte (214) unterscheidet.

5. Die Lichtvorrichtung gemäß Anspruch 2, wobei die zweiten Linsenabschnitte (214) eines Teils die gleiche Krümmung aufweisen und die zweiten Linsenabschnitte (214) des anderen Teils unterschiedliche Krümmungen aufweisen.

6. Die Lichtvorrichtung gemäß Anspruch 1, wobei jeder der ersten Linsenabschnitte (115) eine Krümmung aufweist, die sich von der eines anderen der ersten Linsenabschnitte (115) unterscheidet.

7. Die Lichtvorrichtung gemäß Anspruch 6, wobei jeder der zweiten Linsenabschnitte (214) die gleiche Krümmung aufweist.

8. Die Lichtvorrichtung gemäß Anspruch 6, wobei jeder der zweiten Linsenabschnitte (214) eine Krümmung aufweist, die sich von der eines anderen der zweiten Linsenabschnitte (214) unterscheidet.

9. Die Lichtvorrichtung gemäß Anspruch 6, wobei die zweiten Linsenabschnitte (214) eines Teils die gleiche Krümmung aufweisen und die zweiten Linsenabschnitte (214) des anderen Teils unterschiedliche Krümmungen aufweisen.

10. Die Lichtvorrichtung gemäß Anspruch 1, wobei die ersten Linsenabschnitte (115) eines Teils die gleiche Krümmung aufweisen und die ersten Linsenabschnitte (115) des anderen Teils unterschiedliche Krümmungen aufweisen.

11. Die Lichtvorrichtung gemäß Anspruch 10, wobei jeder der zweiten Linsenabschnitte (214) die gleiche Krümmung aufweist.

12. Die Lichtvorrichtung gemäß Anspruch 10, wobei jeder der zweiten Linsenabschnitte (214) eine Krümmung aufweist, die sich von der eines anderen der zweiten Linsenabschnitte (214) unterscheidet.

13. Die Lichtvorrichtung gemäß Anspruch 10, wobei die zweiten Linsenabschnitte (214) eines Teils die gleiche Krümmung aufweisen und die zweiten Linsenabschnitte (214) des anderen Teils unterschiedliche Krümmungen aufweisen.

14. Die Lichtvorrichtung gemäß Anspruch 1, wobei das zweite Lichtkondensierungssegment (212) jedes der zweiten Linsenkörper (211) einstückig mit dem zweiten Lichtkondensierungssegment (212) eines angrenzenden einen der zweiten Linsenkörper (211) gebildet ist.

15. Die Lichtvorrichtung gemäß Anspruch 1, wobei das Lichtübertragungssegment (113) jedes der ersten Linsenkörper (111) einstückig mit dem zweiten Lichtkondensierungssegment (212) eines angrenzenden einen der zweiten Linsenkörper (211) gebildet ist.

16. Die Lichtvorrichtung gemäß Anspruch 1, die ferner eine Wärmesenkeneinheit (4), die mit dem ersten Licht emittierenden Modul (12) und dem zweiten Licht emittierenden Modul (22) verbunden ist, und eine Lichtabdeckung (5) und ein Gehäuse (6) aufweist, die zusammen einen Gehäuseraum darin definieren, um die erste Licht emittierende Einheit (1), die zweite Licht emittierende Einheit (2) und die Wärmesenkeneinheit (4) aufzunehmen.

## Revendications

1. Dispositif d'éclairage pour un véhicule, comprenant :
une première unité d'émission de lumière (1) qui peut fonctionner pour produire un motif d'éclairage des feux de croisement, ladite première unité d'émission de lumière (1) incluant un premier module de lentille (11) et un premier module d'émission de lumière (12) qui est disposé en arrière par rapport audit premier module de lentille (11),
ledit premier module de lentille (11) présentant une pluralité de premiers corps de lentille (111) qui sont agencés pour former une forme prédéterminée, ledit premier module d'émission de lumière (12) présentant une pluralité de premières sources lumineuses (121) qui sont disposées respectivement en arrière par rapport auxdits premiers corps de lentille (111), chacun desdits premiers corps de lentille (111) présentant une première section de condensation de lumière (112) pour condenser la lumière vers l'avant à partir d'une seule desdites sources lumineuses correspondantes (121), et une première section de lentille (114) qui permet à la lumière condensée de se projeter à travers celle-ci vers l'avant, ladite première section de lentille (114) présentant une pluralité de premières parties de lentille (115) qui sont agencées le long d'au moins une rangée qui s'étend dans une direction transversale de sorte que la lumière se projette vers l'avant à travers lesdites premières parties de lentille (115) desdits premiers corps de lentille (111) pour produire ledit motif d'éclairage des feux de croisement, dans lequel :
ladite première section de lentille (114) de chacun desdits premiers corps de lentille (111) présente une pluralité de rangées desdites premières parties de lentille (115) qui sont agencées dans une direction haut-bas, lesdites premières parties de lentille (115) étant convexes vers l'avant avec des amplitudes différentes, et une courbure de chacune desdites premières parties de lentille (115), mesurée dans la direction transversale, étant différente de celle mesurée dans la direction haut-bas, lesdites premières parties de lentille (115) d'une rangée supérieure présentant des extrémités inférieures qui font saillie davantage vers l'avant que les extrémités supérieures desdites premières parties de lentille (115) d'une rangée inférieure, de sorte qu'une face en gradin est formée entre lesdites extrémités inférieures de ladite rangée supérieure desdites premières parties de lentille (115) et lesdites extrémités supérieures de ladite rangée inférieure desdites premières parties de lentille (115),
chacun desdits premiers corps de lentille (111) présentant en outre une section de transfert de lumière (113) qui est formée entre ladite première section de condensation de lumière (112) et ladite première section de lentille (114) pour guider la lumière condensée vers l'avant jusqu'à ladite première section de lentille (114), ladite section de transfert de lumière (113) de chacun desdits premiers corps de lentille (111) étant formée d'un seul tenant avec ladite section de transfert de lumière (113) d'un seul desdits premiers corps de lentille (111) adjacents,
le dispositif d'éclairage comprenant en outre :
une deuxième unité d'émission de lumière (2) disposée de façon adjacente à ladite première unité d'émission de lumière (1) et coopérant avec ladite première unité d'émission de lumière (1) pour produire de manière fonctionnelle un motif d'éclairage des feux de route, ladite deuxième unité d'émission de lumière (2) incluant un deuxième module de lentille (21) qui coopère avec ledit premier module de lentille (11) pour former une autre forme prédéterminée, et un deuxième module d'émission de lumière (22) qui est disposé en arrière par rapport audit deuxième module de lentille (21), ledit deuxième module de lentilles (21) présentant une pluralité de deuxièmes corps de lentille (211) qui sont agencés pour coopérer avec lesdits premiers corps de lentille (111) pour former ladite autre forme prédéterminée, ledit deuxième module d'émission de lumière (22) présentant une pluralité de deuxièmes sources lumineuses (221) qui sont respectivement disposées en arrière par rapport auxdits deuxièmes corps de lentille (211), chacun desdits deuxièmes corps de lentille (211) présentant une deuxième section de condensation de lumière (212) pour condenser la lumière vers l'avant à partir d'une seule source correspondante desdites deuxièmes sources lumineuses (221), et une deuxième section de lentille (213) qui permet à la lumière condensée de se projeter à travers celle-ci vers l'avant, ladite deuxième section de lentille (213) présentant une pluralité de deuxièmes parties de lentille (214) qui sont agencées le long d'une pluralité de rangées qui s'étendent dans la direction transversale et sont agencées dans une direction haut-bas de sorte que, en coopération avec la lumière se projetant vers l'avant à travers lesdites premières parties de lentille (115) desdits premiers corps de lentille (111), la lumière se projette vers l'avant à travers lesdites deuxièmes parties de lentille (214) desdits deuxièmes corps de lentille (211) pour produire ledit motif d'éclairage des feux de route,
lesdites deuxièmes parties de lentille (214) étant convexes vers l'avant avec des amplitudes différentes, et une courbure de chacune desdites deuxièmes parties de lentille (214), mesurée dans la direction transversale, est différente de celle mesurée dans la direction haut-bas, lesdites deuxièmes parties de lentille (214) d'une rangée supérieure présentant des extrémités inférieures qui font saillie davantage vers l'avant que les extrémités supérieures desdites deuxièmes parties de lentille (214) d'une rangée inférieure, de sorte qu'une face en gradin (215) est formée entre lesdites extrémités inférieures desdites deuxièmes parties de lentille (214) de ladite rangée supérieure et desdites extrémités supérieures desdites deuxièmes parties de lentille (214) de ladite rangée inférieure.

2. Dispositif d'éclairage selon la revendication 1, dans lequel chacune desdites premières parties de lentille (115) présente la même courbure.

3. Dispositif d'éclairage selon la revendication 2, dans lequel chacune desdites deuxièmes parties de lentille (214) présente la même courbure.

4. Dispositif d'éclairage selon la revendication 2, dans lequel chacune desdites deuxièmes parties de lentille (214) présente une courbure différente de celle de n'importe quelle autre desdites deuxièmes parties de lentille (214).

5. Dispositif d'éclairage selon la revendication 2, dans lequel lesdites deuxièmes parties de lentille (214) d'une partie présentent la même courbure, et lesdites deuxièmes parties de lentille (214) de l'autre partie présentent des courbures différentes.

6. Dispositif d'éclairage selon la revendication 1, dans lequel chacune desdites premières parties de lentille (115) présente une courbure différente de celle de n'importe quelle autre desdites premières parties de lentille (115).

7. Dispositif d'éclairage selon la revendication 6, dans lequel chacune desdites deuxièmes parties de lentille (214) présente la même courbure.

8. Dispositif d'éclairage selon la revendication 6, dans lequel chacune desdites deuxièmes parties de lentille (214) présente une courbure différente de celle de n'importe quelle autre desdites deuxièmes parties de lentille (214).

9. Dispositif d'éclairage selon la revendication 6, dans lequel lesdites deuxièmes parties de lentille (214) d'une partie présentent la même courbure, et lesdites deuxièmes parties de lentille (214) de l'autre partie présentent des courbures différentes.

10. Dispositif d'éclairage selon la revendication 1, dans lequel lesdites premières parties de lentille (115) d'une partie présentent la même courbure, et lesdites premières parties de lentille (115) de l'autre partie présentent des courbures différentes.

11. Dispositif d'éclairage selon la revendication 10, dans lequel chacune desdites deuxièmes parties de lentille (214) présente la même courbure.

12. Dispositif d'éclairage selon la revendication 10, dans lequel chacune desdites deuxièmes parties de lentille (214) présente une courbure différente de celle de n'importe quelle autre desdites deuxièmes parties de lentille (214).

13. Dispositif d'éclairage selon la revendication 10, dans lequel lesdites deuxièmes parties de lentille (214) d'une partie présentent la même courbure, et lesdites deuxièmes parties de lentille (214) de l'autre partie présentent des courbures différentes.

14. Dispositif d'éclairage selon la revendication 1, dans lequel ladite deuxième section de condensation de lumière (212) de chacun desdits deuxièmes corps de lentille (211) est formée d'un seul tenant avec ladite deuxième section de condensation de lumière (212) d'un seul desdits deuxièmes corps de lentille (211) adjacents.

15. Dispositif d'éclairage selon la revendication 1, dans lequel ladite section de transfert de lumière (113) de chacun desdits premiers corps de lentille (111) est formée d'un seul tenant avec ladite deuxième section de condensation de lumière (212) d'un seul desdits deuxièmes corps de lentille (211) adjacents.

16. Dispositif d'éclairage selon la revendication 1, comprenant en outre une unité de dissipation thermique (4) qui est connectée audit premier module d'émission de lumière (12) et audit deuxième module d'émission de lumière (22), et un cache-lumière (5) et un boîtier (6) qui définissent conjointement un espace de logement destiné à y recevoir ladite première unité d'émission de lumière (1), ladite deuxième unité d'émission de lumière (2) et ladite unité de dissipation thermique (4).
